# EUROPÄISCHE PATENTSCHRIFT

(11) **EP 1 470 332 B1**
(45) Veröffentlichungstag und Bekanntmachung des Hinweises auf die Patenterteilung: **15.06.2016**
(21) Anmeldenummer: 03704265.2
(22) Anmeldetag: 28.01.2003
(51) Int. Cl.: F02M 55/00, F16L 37/088

(54) **LECKAGEANSCHLUSS ZUM ANBRINGEN EINER LECKAGELEITUNG AN EINEN KRAFTSTOFFINJEKTOR**
LEAKAGE CONNECTION FOR CONNECTING A LEAKAGE PIPE TO A FUEL INJECTOR
RACCORDEMENT DESTINÉ AU MONTAGE D'UNE CONDUITE DE FUITE SUR UN INJECTEUR DE CARBURANT

(30) Priorität: 30.01.2002 DE 10203600
(43) Veröffentlichungstag der Anmeldung: 27.10.2004
(73) Patentinhaber: Continental Automotive GmbH, 30165 Hannover (DE)
(72) Erfinder: DICK, Jürgen, 93164 Laaber (DE); SCHÜRZ, Willibald, 93188 Pielenhofen (DE); SIMMET, Martin, 93077 Bad Abbach (DE)
(86) Internationale Anmeldenummer: PCT/DE2003/000225
(87) Internationale Veröffentlichungsnummer: WO 2003/064849

(56) Entgegenhaltungen:
- EP-A- 0 889 232
- DE-A- 4 305 609
- DE-A- 19 809 315
- DE-A- 19 832 865
- DE-U- 29 510 508
- US-A- 3 908 911
- US-A- 4 565 392
- US-A- 4 630 630
- US-A- 5 226 682

## Beschreibung

Die vorliegende Erfindung betrifft einen Kraftstoffinjektor mit einem Leckageanschluss zum Anbringen einer Leckageleitung.

Ein derartiger Leckageanschluss ist bekannt aus der EP 0 886 065 *A1, wobei zur Funktionsweise von Einspritzsystemen an jedem Injektor u. a. ein Anschluss für die Rückführung eines Teils des dem Injektor zugeführten Dieselkraftstoffs zum Fahrzeugtank benötigt wird. Dieser Leckageanschluss soll kostengünstig zu fertigen sowie einfach montier- und demontierbar, jedoch nicht unabsichtlich lösbar sein. Gemäß der EP 0 886 065 A1 wird von einer Drahtklammer ausgegangen, die eine passende Nut am Leckageanschluss voraussetzt. Bei der Montage wird zu Beginn der Leckageeinsatz in die am Injektor befindliche Leckagebohrung eingeführt. Anschließend wird von der Seite die Drahtklammer in die am Leckageeinsatz befindliche Nut gedrückt, um den Leckageanschluss zu sichern. Die Drahtklammer ist dabei in einer schlitzartigen Führung untergebracht, die Teil des Injektorgehäuses ist. Das Lösen des Leckageanschlusses geschieht in umgekehrter Reihenfolge.

Entsprechendes gilt für einen Leckageanschluss gemäß der DE 199 40 387 C1, wobei die Drahtklammer mit einem ersten geraden Arm in einer Öffnung am Anschlussstutzen gehalten wird. Mit einem zweiten geschwungen ausgebildeten Arm wird in einer Montageendstellung über eine in die Bohrung hineinreichende Aussparung am Anschlussstutzen eine Klemmverbindung mit dem Einsatz des Anschlussnippels herstellt.
Die DE 295 10 508 U1 offenbart eine Lenkhilfpumpe, deren Ansaugbereich einen Ansaugstutzen aufweist, der in eine Bohrung eines Pumpengehäuses eingesteckt ist und axial arretiert aber drehbar in der Bohrung des Pumpengehäuse gelagert ist. Zur axialen Arretierung des Ansaugstutzens weist die Bohrung in ihrer Innenwand und der Ansaugstutzen in seiner Außenwand jeweils eine Ringnut auf, zwischen welchen ein Sprengring im montierten Zustand des Ansaugstutzens vorgesehen ist. Ferner ist der Ansaugstutzen gegenüber dem Gehäuse mittels einer Dichtung abgedichtet. Weiterhin ist die Lenkhilfpumpe mit einem Leckageanschluss zum Anbringen einer Leckageleitung, wobei der Leckageanschluss an einem Anschlussstutzen des Kraftstoffinjektors angeordnet ist, wobei der Anschlussstutzen einen Anschlussnippel umfasst, der mit einem Einsatz in einer Bohrung des Anschlussstutzens geführt ist, und mit einer biegeelastischen Sicherungseinrichtung, die den Anschlussnippel in der Bohrung festhält, befestigt ist, wobei die Sicherheitseinrichtung durch einen Sprengring gebildet ist, der in einer an dem Einsatz umfangsseitig ausgebildeten Nippelnut eingesetzt ist, wobei korrespondierend zu der Nippelnut in der Innenumfangswand der Bohrung eine Bohrungsnut ausgebildet ist, wobei im montierten Zustand des Leckageanschlusses der Sprengring mit einem Teil seiner Materialstärke in der Bohrungsnut und dem Rest der Materialstärke in der Nippelnut liegt, wodurch der Leckageanschluss gegen ein unbeabsichtigtes Abziehen gesichert ist, ausgestattet

Die DE 198 32 865 A1 offenbart ein Verfahren zur Befestigung einer Rohrleitung in einem Gehäuse oder einem Zylinder einer Zahnstangen-Hydrolenkung. Bei dem Verfahren wird die Rohrleitung mit einem Sprengring versehen und anschließend in einen Zylinder eingeführt, wobei der Sprengring in der Montageposition des Rohrs in eine im Zylinder vorgesehene Sprengringnut einrastet. Ferner ist in einer bevorzugten Ausführungsform der Sprengring am Rohr vorbefestigt. Darüber hinaus ist das Rohr gegenüber dem Gehäuse mittels einer O-Ring-Dichtung abgedichtet.

Die DE 295 10 508 offenbart einen Kraftstoffinjektor mit einem Leckageanschluss zum Anbringen einer Leckageleitung gemäß des Oberbegriffs des Anspruchs 1.

Aufgabe der vorliegenden Erfindung ist es, einen Kraftstoffinjektor-Leckageanschluss zum Anbringen einer Leckageleitung an einem Kraftstoffinjektor bereitzustellen, wobei sich der Kraftstoffinjektor-Leckageanschluss durch eine kostengünstige Herstellung sowie eine einfache und zuverlässige Montierbarkeit auszeichnen soll.

Erfindungsgemäß ist dies bei einem Kraftstoffinjektor mit einem Leckageanschluss mit den Merkmalen des Patentanspruchs 1 erreicht. Der erfindungsgemäße Kraftstoffinjektor-Leckageanschluss sieht an Stelle der Drahtklammer einen einfachen Ring aus Federstahl insbesondere in Form eines Sprengringes vor. Der Sprengring ist dabei auf dem Leckageanschluss in einer Nut vormontiert und einseitig geschlitzt. Die Größe des Schlitzes ist dabei so bemessen, dass bei der Montage des Leckageanschlusses der Sprengring so weit zusammengedrückt werden kann, dass er durch die Bohrung im Injektor passt. An dem Leckageanschluss bzw. dem Anschlussnippel ist durch die Formgebung der Nut entsprechend Freiraum für die Verformung des Sprengrings vorgesehen. Im unteren Bereich der Leckagebohrung befindet sich eine korrespondierende Nut, in der sich der Sprengring wieder entspannen kann. Die Demontage des Leckageanschlusses ist danach nur durch Überwinden der Vorspannkräfte des Sprengringes möglich. Die Höhe der Montage- und Demontagekräfte kann durch die Federsteifigkeit des Sprengrings sowie durch Montageschrägen an der Leckagebohrung beeinflusst werden. Die Montage- und Demontage geschieht durch einfaches Aufstecken bzw. Abziehen. Weitere Vorteile der Erfindung bestehen in den geringen Fertigungskosten am Injektorgehäuse durch den Wegfall der Führung für die Drahtklammer und in der im Vergleich zur Drahtklammer einfachen Ausbildung des Sprengringes.

Nachfolgend ist ein Ausführungsbeispiel des erfindungsgemäßen Leckageanschlusses beschrieben; es zeigen:
- Fig. 1: in einer Seitenansicht einen Kraftstoffinjektor mit einem erfindungsgemäßen Leckageanschluss,
- Fig. 2: in einer Seitenansicht vergrößert einen Anschlussnippel des Leckageanschlusses, sowie
- Fig. 3: in einer Fig. 2 entsprechenden Schnittdarstellung, den in einer Öffnung des ausschnittsweise gezeigten Kraftstoffinjektors montierten Leckageanschluss.

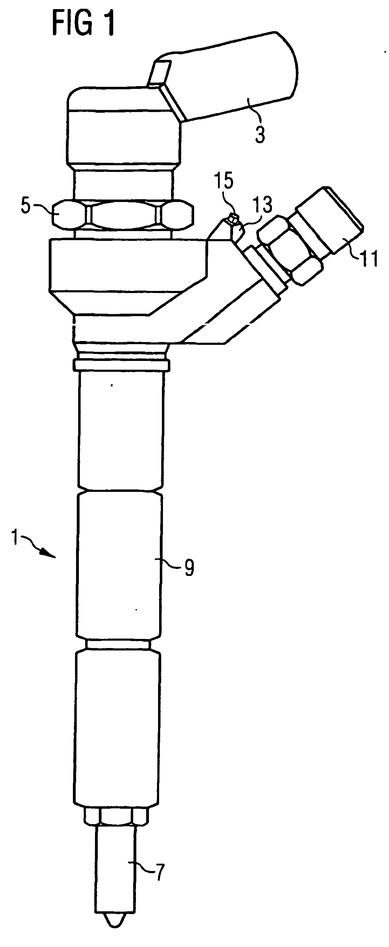

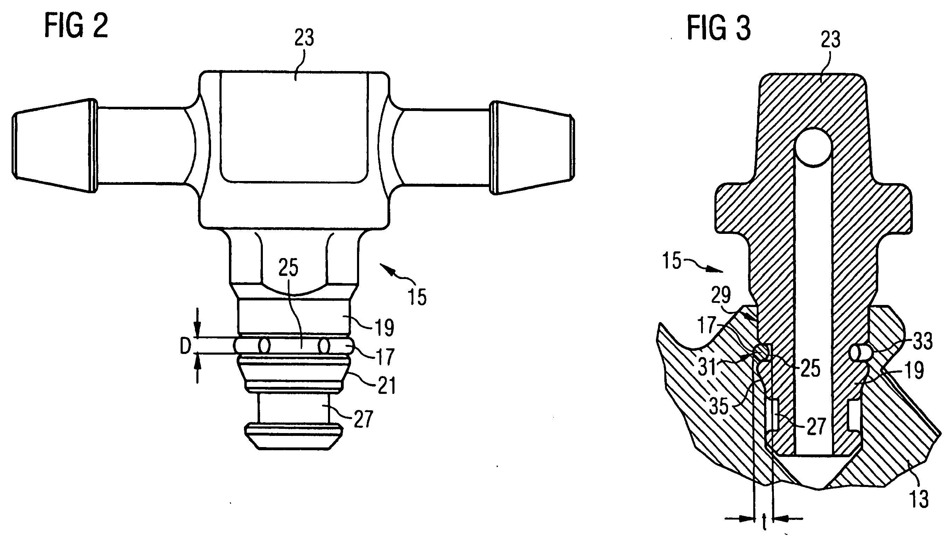

Gemäß Fig. 1 besteht in an sich bekannter Weise ein Kraftstoffinjektor 1 im Wesentlichen aus einem Aktoranschluss 3, einem Stellantrieb 5 und einer Einspritzdüse 7. Dabei sind der Antrieb 5 und die Düse 7 in einem Injektorkörper 9 angeordnet. An dem Injektorkörper 9 sind zudem ein Hochdruckanschluss 11, über den dem Kraftstoffinjektor 1 Kraftstoff unter hohem Druck zugeführt werden kann, sowie ein Leckageanschluss vorgesehen, über den überschüssiger Kraftstoff aus dem Kraftstoffinjektor 1 abgeführt werden kann. Der Leckageanschluss besteht im Wesentlichen aus einem Anschlussstutzen 13, einem Anschlussnippel 15 (in Fig. 1 stark vereinfacht gezeigt) und einem in den Fig. 2 und 3 gezeigten Sprengring 17.

Gemäß Fig. 2 weist der Anschlussnippel 15 insbesondere einen Einsatz 19 mit einem ersten Anschlag 21 und einen Aufsatz 23 auf. Auf den Aufsatz 23 des Anschlussnippels 15 kann eine Leckageleitung aufgesteckt werden, die den Kraftstoffinjektor 1 mit dem Kraftstoffvorratsbehälter verbindet (nicht gezeigt). An einer Umfangswand des Einsatzes 19 sind eine Nippelnut 25 sowie eine O-Ring-Nut 27 ausgebildet. In der Nippelnut 25 ist der vormontierte Sprengring 17 gehaltert. Deutlich erkennbar besitzt der Sprengring 17 im entspannten Zustand einen größeren Ringdurchmesser als die Kontur des Leckageanschlusses bzw. des Einsatzes 19 in unmittelbarer Umgebung. Andererseits ist der Ringdurchmesser noch klein genug, damit der entspannte Sprengring 17 sicher in der Nippelnut 25 an dem Anschlussnippel 15 gehaltert ist. Die Nippelnut 25 weist eine Tiefe t auf, die geringfügig größer ist als ein Durchmesser D des Ringmaterials.

In Fig. 3 sind ausschnittsweise der Anschlussstutzen 13 des Injektorkörpers 9 und der Anschlussnippel 15 im montierten Zustand des Kraftstoffinjektor-Leckageanschlusses gezeigt. Im Anschlussstutzen 13 bzw. im Injektorkörper 9 ist eine Bohrung 29 ausgebildet, in die der Einsatz 19 des Anschlussnippels 15 gesteckt ist. Die Außenkontur des Einsatzes 19 ist dabei der Innenkontur der Bohrung 29 angepasst. Korrespondierend zur Nippelnut 25 ist in der Bohrung 29 eine Bohrungsnut 31 zur teilweisen Aufnahme des entspannten Sprengringes 17 vorgesehen. Nach oben hin bzw. in Demontagerichtung ist die Bohrungsnut 31 leicht angeschrägt und weist somit eine Abziehschräge 33 zur gezielten Erleichterung der Demontage des Leckageanschlusses auf. Der montierte Leckageanschluss befindet sich dabei so weit in der Aufnahmebohrung 29, dass der Sprengring 17 mit einem Teil seines Materialdurchmessers D in der Bohrungsnut 31 und mit dem Rest in der Nippelnut 25 entspannt liegt, wodurch ein einfaches Lösen des Leckageanschlusses verhindert ist. Weiter unterhalb in Montagerichtung ist die Bohrung 29 verengt zur Aufnahme eines nicht gezeigten O-Ringes in der O-Ring-Nut 27. Das Einstecken des Einsatzes 19 in die Bohrung 29 ist begrenzt durch das Anliegen des ersten Anschlages 21 des Anschlussnippels 15 an einem an der Innenwand der Bohrung 29 ausgebildeten zweiten Anschlag 35.

## Patentansprüche

1. Kraftstoffinjektor mit einem Leckageanschluss zum Anbringen einer Leckageleitung, wobei der Leckageanschluss an einem Anschlussstutzen (13) des Kraftstoffinjektors (1) angeordnet ist, wobei der Anschlussstutzen (13) einen Anschlussnippel (15) umfasst, der mit einem Einsatz (19) in einer Bohrung (29) des Anschlussstutzens (13) geführt ist, und mit einer biegeelastischen Sicherungseinrichtung (17), die den Anschlussnippel (15) in der Bohrung (29) festhält, befestigt ist, wobei die Sicherheitseinrichtung durch einen Sprengring (17) gebildet ist, der in einer an dem Einsatz (19) umfangsseitig ausgebildeten Nippelnut (25) eingesetzt ist, wobei korrespondierend zu der Nippelnut (25) in der Innenumfangswand der Bohrung (29) eine Bohrungsnut (31) ausgebildet ist, wobei im montierten Zustand des Leckageanschlusses der Sprengring (17) mit einem Teil seiner Materialstärke in der Bohrungsnut (31) und dem Rest der Materialstärke in der Nippelnut (31) liegt, wodurch der Leckageanschluss gegen ein unbeabsichtigtes Abziehen gesichert ist, wobei die Bohrungsnut (31) umfangsseitig in Demontagerichtung eine Abziehschräge (33) zur gezielten Erleichterung der Demontage des Leckageanschlusses aufweist, wobei der Anschlussnippel (15) und die Bohrung (29) korrespondierende Anschläge (21, 35) aufweisen, die den Einführweg des Einsatzes (18) in die Bohrung (29) begrenzen, wobei ein erster Anschlag (21) der korrespondierenden Anschläge (21, 35) unterhalb der Nippelnut (25) und ein zweiter Anschlag (35) der korrespondierenden Anschläge (21, 35) unterhalb der Bohrungsnut (31) angeordnet sind, wobei die korrespondierenden Anschläge (21, 35) in einem Winkel geneigt zur Längsachse des Anschlussnippels (15) angeordnet sind, und wobei unterhalb der korrespondierenden Anschläge (21, 35) eine O-Ring-Nut (27) zur Aufnahme eines O-Rings an dem Anschlussnippel (15) angeordnet ist.

## Claims

1. Fuel injector having a leakage connector for attaching a leakage line, the leakage connector being arranged on a connector stub (13) of the fuel injector (1), the connector stub (13) comprising a connector nipple (15) which is guided with an insert (19) in a bore (29) of the connector stub (13) and is fastened to a resiliently flexible securing device (17) which holds the connector nipple (15) fixedly in the bore (29), the safety device being formed by a circlip (17) which is inserted in a nipple groove (25) which is configured on the circumferential side of the insert (19), a bore groove (31) being configured in the inner circumferential wall of the bore (29) in a corresponding manner to the nipple groove (25), the circlip (17) lying with part of its material thickness in the bore groove (31) and the rest of the material thickness in the nipple groove (25) in the assembled state of the leakage connector, as a result of which the leakage connector is secured against being pulled off unintentionally, the bore groove (31) having a pull-off bevel (33) on the circumferential side in the removal direction for targeted facilitation of the removal of the leakage connector, the connector nipple (15) and the bore (29) having corresponding stops (21, 35) which limit the insertion travel of the insert (18) into the bore (29), a first stop (21) of the corresponding stops (21, 35) being arranged below the nipple groove (25) and a second stop (35) of the corresponding stops (21, 35) being arranged below the bore groove (31), the corresponding stops (21, 35) being arranged in an inclined manner at an angle with respect to the longitudinal axis of the connector nipple (15), and an O-ring groove (27) being arranged below the corresponding stops (21, 35) for receiving an O-ring on the connector nipple (15).

## Revendications

1. Injecteur de carburant avec un raccord de fuite pour le montage d'une conduite de fuite, le raccord de fuite étant disposé au niveau d'une tubulure de raccordement (13) de l'injecteur de carburant (1), la tubulure de raccordement (13) comprenant un embout de raccordement (15) qui est guidé avec un insert (19) dans un alésage (29) de la tubulure de raccordement (13), et qui est fixé par un dispositif de sécurité flexible élastique (17) qui maintient fixement l'embout de raccordement (15) dans l'alésage (29), le dispositif de sécurité étant formé par un jonc (17) qui est inséré dans une rainure d'embout (25) réalisée du côté de la périphérie au niveau de l'insert (19), une rainure d'alésage (31) étant réalisée dans la paroi périphérique intérieure de l'alésage (29) de manière à correspondre à la rainure d'embout (25), le jonc (17), dans l'état monté du raccord de fuite, étant situé avec une partie de son épaisseur de matériau dans la rainure d'alésage (31) et avec le reste de l'épaisseur de matériau dans la rainure d'embout (25), de sorte que le raccord de fuite soit protégé contre un retrait accidentel, la rainure d'alésage (31) présentant, du côté de la périphérie, dans la direction de démontage, un biseau de retrait (33) pour faciliter de manière spécifique le démontage du raccord de fuite, l'embout de raccordement (15) et l'alésage (29) présentant des butées correspondantes (21, 35) qui délimitent la course d'introduction de l'insert (18) dans l'alésage (29), une première butée (21) des butées correspondantes (21, 35) étant disposée en dessous de la rainure d'embout (25) et une deuxième butée (35) des butées correspondantes (21, 35) étant disposée en dessous de la rainure d'alésage (31), les butées correspondantes (21, 35) étant disposées de manière inclinée suivant un certain angle par rapport à l'axe longitudinal de l'embout de raccordement (15), et une rainure de joint torique (27) destinée à recevoir un joint torique au niveau de l'embout de raccordement (15) étant disposée en dessous des butées correspondantes (21, 35).
